Europäisches Patentamt

(19) European Patent Office

Office européen des brevets

(11) Publication number: **0 035 585**

**A1**

(12) **EUROPEAN PATENT APPLICATION**

(21) Application number: **80101251.9**

(22) Date of filing: **12.03.80**

(51) Int. Cl.³: **F 26 B 13/10**
**F 26 B 20/00, F 26 B 7/00**

(43) Date of publication of application:
16.09.81 Bulletin 81 37

(84) Designated Contracting States:
CH DE FR GB IT

(71) Applicant: THE ICHIKIN, LTD.
673-1, Nomura-cho
Kusatsu-shi Shiga-ken(JP)

(72) Inventor: Kawaguchi, Bunshiro
21, Kuroiwa, Misasagi Yamashina
Higashiyma-ku Kyoto-shi, Kyoto-fu(JP)

(74) Representative: Vetter, Ewald Otto, Ing. grad.
Philippine-Welser-Strasse 14
D-8900 Augsburg(DE)

(54) Improved combination-type dryer for textile sheet materials.

(57) On a combination-type dryer for textile sheet materials having upper side short loop (10) and lower side tentering dryers (20) the heating medium in the tentering dryer (20), is transferred, after removal of harmful inclusions such as tar, to the short loop dryer (10) for re-utilization, thereby enabling effective saving of thermal energy.

Fig. 4

EP 0 035 585 A1

# IMPROVED COMBINATION-TYPE DRYER

## FOR

## TEXTILE SHEET MATERIALS

BACKGROUND OF THE INVENTION

The present invention relates to improved combination-
type dryer for textile sheet materials, and more particularly
relates to improvement in heating system on a combination-
type dryer for textile sheet materials such as elongated
woven or knitted cloths, which is made up of an upper side
short loop dryer and a lower side tenter dryer.

Strain and elongation develop bi-directionally on
textile sheet materials after wet treatment such as drying,
scouring and resin coating. Such strain and elongation have
to be removed during the drying in order to enable smooth
and trouble-free cutting and sewing of them for apparel
purposes.

On a known combination-type dryer of the above-described
type, drying of a textile sheet material is carried on
during its continuous travel through the upper side short loop dryer, whereas shrinkage of the textile sheet material caused by such drying is compensated in the lower side tenter dryer in order to provide the textile sheet material with soft touch, brilliance and a longitudinally unifort prescribed width.

The upper side short loop dryer and the lower side tenter dryer are in general thermally separated from each other by an insulating bulkhead so that the two chambers are separately controlled in temperature. The interior of the upper side short loop dryer is in general kept at a temperature from 120 to 130° C, whereas the lower side tenter dryer at a temperature from 180 to 200° C.

On a conventional combination-type dryer, the heating medium such as high temperature gas supplied into the tenter dryer is discharged outside the system after heating of the textile sheet material travelling through the chamber. This eventuates in waste of thermal energy only which otherwise could be utilized further.

SUMMARY OF THE INVENTION

It is the object of the present invention to efficiently re-utilize the thermal energy already used for the textile sheet material travelling through the lower side tenter dryer on a combination-type dryer.

In accordance with the basic aspect of the present invention, the heating medium supplied into the lower side tenter dryer is re-collected after heating of the textile sheet material travelling therethrough, and, after removal of harmful inclusions such as tar, supplied into the upper side short loop dryer.

BRIEF DESCRIPTION OF THE DRAWINGS

Fig. 1A is a side view, partly in section, of one embodiment of the combination-type dryer in accordance with the present invention,

Fig. 1B is a plan view of the combination-type dryer shown in Fig. 1A,

Figs. 2 and 3 are side view, partly in section, of embodiments of the disposable cassette-type filter used for the combination-type dryer in accordance with the present invention, and

Fig. 4 is a sectional plan view of a like cassette-type filter.

DESCRIPTION OF THE PREFERRED EMBODIMENTS

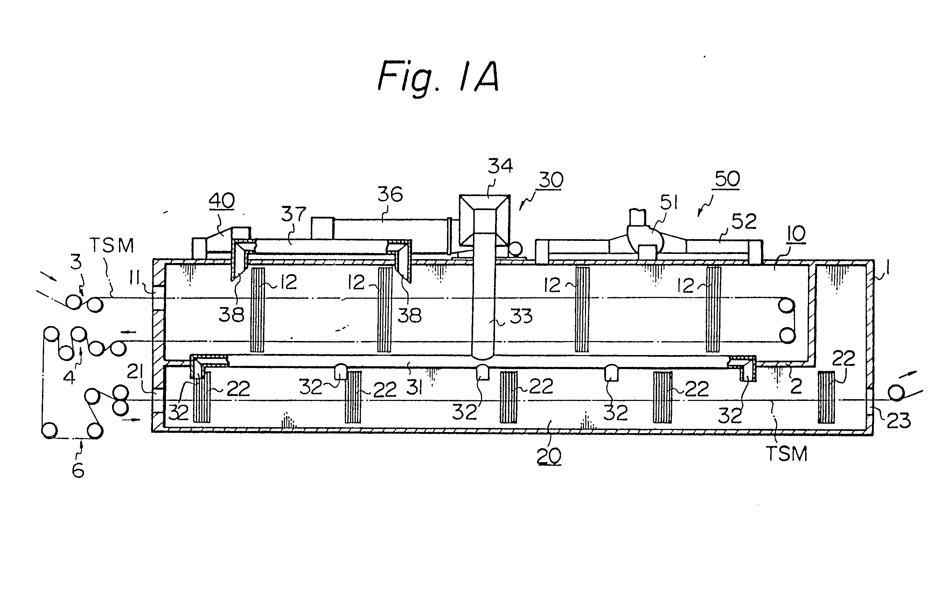

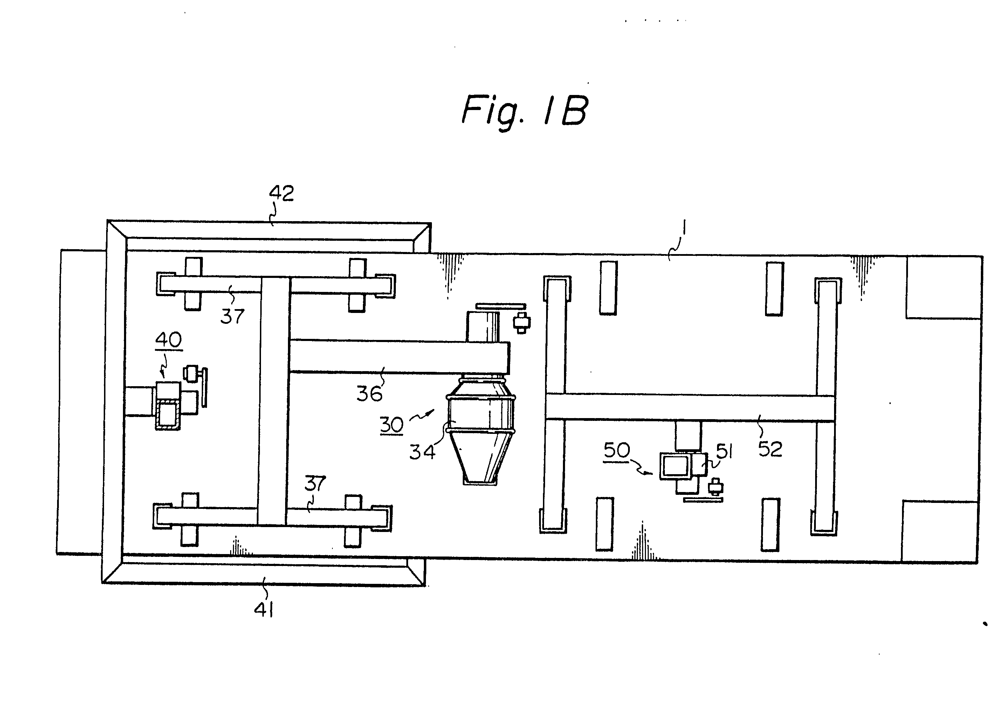

Figs. 1A and 1B depict one embodiment of the combination type dryer in accordance with the present invention, which includes, as the major components, an upper side short loop dryer 10, a lower side tenter dryer 20 arranged below the short loop dryer 10, a heating medium transferer 30 thermally connecting both dryers 10 and 20, and a heat supplier 40 and a ventilator 50 annexed to the short loop dryer 10. Both dryers 10 and 20 are elongated in the travelling direction of a textile sheet material TSM, i.e. from left to right in the illustration.

The short loop and tenter dryers 10 and 20 are defined

- 4 -

by a box-type hollow housing 1 and separated from each other by means of an insulating bulkhead 2. Both dryers 10 and 20 are provided with openings 11 and 21 formed in the one longitudinal end of the housing 1 having dimensions sufficient for allowing free entrance of the textile sheet material TSM. A further opening 23 is formed in the other longitudinal end of the housing 1 for free leave of the textile sheet material TSM from the tenter dryer 20.

Laterally facing the travelling path of the textile sheet material TSM, a number of heat emanator elements 12 are arranged in the short loop dryer 10 at adequate intervals along the travelling path. The heat emanator elements 12 are connected, via ducts 41 and 42, to a heat supplied 40 arranged on the housing. Likewise, a number of heat emanator elements 22 are arranged, laterally facing the travelling path of the textile sheet material TSM, at adequate intervals along the travelling path. The heat emanator elements 12 are connected to a give heat supply source (not shown).

The heating medium transferer 30 includes a horizontal collector pipe 31 having several taker-in ends 32 opening in the tenter chamber 20, a vertical duct 33 connecting the collector pipe 31 to a fan assembly 34 mounted atop the housing 1. A further duct 36 is arranged atop the housing 1 for connecting the fan assembly 34 to distribution pipes 37 each of which has a blow-out end 38 opening in the short loop dryer 10, preferably facing each heat emanator element 12. Although only two distribution pipes 37 are shown in the drawings each with two blow-out ends 38, the number of the distribution pipes 37 and that of the blow-out ends 38 per each distribution pipe 37 can be both designed freely in accordance with requirement in practice.

Preferably, the collector pipe 31 extends almost over the entire length of the tenter dryer 20 end has taker-in ends 32 at different sections in the tenter dryer 20 so that the heating medium prevailing in the tenter dryer 20 can be collected uniformly. Although the taker-in ends 32 are located at a same level in the tenter dryer 20, their levels may differ from each other for further uniform collection of the heating medium. Same can be said for the blow-out ends 38 of the distribution pipe 37.

The ventilator 50 includes a fan assembly 51 mounted atop the housing 1, and a ventilation duct 52 opening in the short leep dryer 10 and connected to the fan assembly 51.

As described already, the heating medium once used in the tentering dryer 20 is re-utilized for drying of the textile sheet material in the short loop dryer 10. High temperature heating of the textile sheet material in the tentering dryer 20 tends to drive harmful substances such as tar into the ambient heating medium out of the textile sheet material. For safe heating of the textile sheet material in the short loop dryer 10 by the heating medium passed from the tenering dryer 20, such harmful inclusions have to be removed off the heating medium during its transfer.

For this purpose, the fan assembly 34 used for the present invention should include a filter placed in the passage of the heating medium. For free and easy replacement after contamination, the filter should preferably be of a disposable cassette-type.

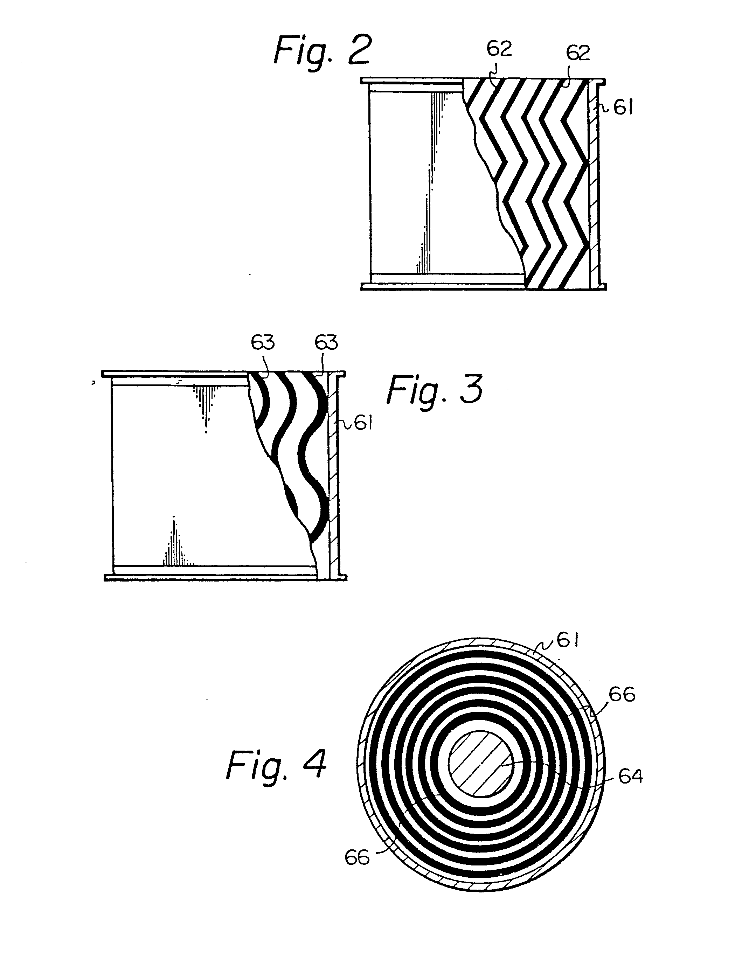

One embodiment of such a disposable cassette-type filter is shown in Fig. 2, in which the filter 60 includes a casing 61, and an number of angularly corrugated filter elements 62 which extend in the axial direction of the casing 61 and are somewhat spaced from each other. Each filter element 62 may take the form of a mixture of asbestos with pulp which is suited for collecting tar included in the heating medium.

0035585

A valiant shown in Fig. 3 includes like filter elements 63 but corrugated roundly.

A further variant shown in Fig. 4 includes a core 64 and a number of concentrically arranged annular filter elements 66.

In either case, the heating medium flows in the axial direction through the filter and harmful inclusions such as tar are collected by the filter elements out of the processed heating medium during its travel through the filter. Needless to say, other types of filters available on market are well usable for this purpose.

The textile sheet material TSM passed from the preceding process station is introduced, via the first group of rollers 3, into the short loop chamber 10 through the opening 11 and subjected to drying at a temperature from 120 to 130°C. The heating medium from the heat supplier 40 and that transferred from the tentering dryer 20 take past in this drying. After sufficient drying, the textile sheet material TSM is pull out of the short loop dryer 10 by means of the second group of rollers 4 and introduced into the tentering dryer 20 by

- 8 -

means of the third group of rollers 5 for tentering at a temperature from 180 to 200°C.

During the above-described process, the high temperature heating medium in the tentering dryer 20 is collected by the collector pipes 31, passed to the fan assembly 34 for removal of the harmful inclusion such as tar via the vertical duct 33, passed to the distribution pipes 37 via the duct 36, and supplied into the short loop dryer 10 via the blow-out ends 38.

In accordance with the present invention, re-utilization of the heating medium ventilated from the tentering dryer greatly contibutes to saving of thermal energy, thereby lowering the running cost of the dryer. Use of the disposable cassette-type filter for purification assures constant, reliable supply of the heating medium into the short loop dryer.

CLAIMS

1.  Improved combination-type dryer for textile sheet
materials comprising

an elongated short loop dryer,

an elongated tentering dryer arranged beneath said
short loop dryer and thermally separated from the latter by
means of an insulating bulkhead, and

means for transferring the heating medium in said
tentering dryer to said short loop dryer after removal of
harmful inclusions.

2.  Improved combination-type dryer as claimed in claim 1
in which said transferring means include

at least one collector pipe having at least one taker-
in end opening in said tentering dryer,

a fan assembly connected to said collector pipe and
including a filter placed in the travelling path of said
heating medium therethrough, and

at least one distribution pipe connected to said fan assembly and having at least one blow-out end opening in said short loop dryer.

3. Improved combination-type dryer as claimed in claim 2 in which

said filter is of a disposable cassette type.

4. Improved combination-type dryer as claimed in claim 3 in which said disposable cassette-type dryer includes

a casing, and

a number of corrugated filter elements placed in said casing, extending in its axial direction, and spaced from each other.

5. Improved combination-type dryer as claimed in claim 3 in which said disposable cassette-type dryer includes

a casing, and

a number of annular concentric filter elements placed
in said casing, extending in its axial direction, and
spaced from each other.

Fig. IA

2

Fig. 1 B

Fig. 2

62    62

61

63    63

Fig. 3

61

Fig. 4

61

66

64

66

0035585

| | European Patent Office | EUROPEAN SEARCH REPORT | Application number |
|---|---|---|---|
| | | | EP 80 10 1251 |

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - C - 112 136 (PITSCH) <br> * Whole patent * | 1,2 | F 26 B 13/10 <br> 20/00 <br> 7/00 |
| | DE - C - 92 032 (JAHR) <br> * Whole patent * | 1,2 | |
| | DE - C - 530 552 (HAUBOLD) <br> * Whole patent * | 1,2 | |
| | | | TECHNICAL FIELDS SEARCHED (Int. Cl.³) |
| | US - A - 1 768 455 (SIBSON) <br> * Whole patent * | 1,2 | F 26 B |
| | GB - A - 2 000 263 (BRUCKNER) <br> * Whole patent * | 1,2 | |
| | DE - B - 1 198 292 (VEB LUFTTECH- NISCHE ANLAGEN BERLIN) <br> * Whole patent * | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-11-1980 | DE RIJCK |

EPO Form 1503.1 06.78